# EUROPÄISCHE PATENTSCHRIFT

(11) **EP 3 342 618 B1**
(45) Veröffentlichungstag und Bekanntmachung des Hinweises auf die Patenterteilung: **17.06.2020**
(21) Anmeldenummer: 17206335.6
(22) Anmeldetag: 11.12.2017
(51) Int. Cl.: B60K 15/067, B60K 15/03, B60K 15/07, B60R 11/00, F16B 2/08

(54) **SPANNBAND, INSBESONDERE ZUR BEFESTIGUNG EINES GEGENSTANDS AN EINEM FAHRZEUG**
TIGHTENING STRAP, IN PARTICULAR FOR ATTACHING AN OBJECT TO A VEHICLE
BANDE DE SERRAGE, EN PARTICULIER PERMETTANT DE FIXER UN OBJET SUR UN VÉHICULE

(30) Priorität: 30.12.2016 DE 102016015645
(43) Veröffentlichungstag der Anmeldung: 04.07.2018
(73) Patentinhaber: MAN Truck & Bus SE, 80995 München (DE)
(72) Erfinder: Knebel, Sebastian, 82205 Gilching (DE)
(74) Vertreter: v. Bezold & Partner Patentanwälte - PartG mbB

(56) Entgegenhaltungen:
- WO-A1-2018/017006
- WO-A1-2018/030931
- CN-U- 204 895 124
- CN-U- 205 292 277
- DE-A1- 19 721 253
- DE-U1- 29 819 881
- US-A- 4 365 393

## Beschreibung

Die Erfindung betrifft ein Spannband, das zur Befestigung von einem Behälter, insbesondere einem Fahrzeugtank, oder Transportgut an einem Fahrzeug, insbesondere einem Nutzfahrzeug, ausgelegt ist. Insbesondere betrifft die Erfindung ein Spannband zur Befestigung eines Fahrzeugtanks an einem Tankträger eines Fahrzeugs, vorzugsweise eines Nutzfahrzeugs, wie z. B. eines Lastkraftwagens oder Omnibus.

Es ist allgemein bekannt, Behälter, wie z. B. Druckluftbehälter oder Fahrzeugtanks, mit Spannbändern an einem passenden Behälterträger zu befestigen (siehe z. B. CN 205 292 277 U, DE 197 21 253 A1 oder DE 298 19 881 U1, oder die nachveröffentlichten WO 2018/030931 A1 und WO 2018/017006 A1). Ein aus der Praxis bekanntes Spannband zur Befestigung eines Fahrzeugtanks an einem Trankträger weist an einem Ende eine aus dem Flachbandmaterial des Spannbandes gebildete Befestigungs-Schlaufe zur Aufnahme eines Haltebolzens des Tankträgers und an einem entgegengesetzten Ende eine Spannschloss-Schlaufe auf, in der ein Spannbolzen zur Verbindung mit dem Fahrzeugträger oder mit dem Spannschloss eines weiteren Spannbandes sitzt. Typischerweise sind mehrere Spannbänder vorgesehen, die den Tank auf dem Tankträger fixieren.

Aufgrund der Biegsamkeit der Spannbänder und der Bereitstellung von deformierbaren Unterlagen zwischen den Spannbändern und der Tankoberfläche ist der Tank im fixierten Zustand relativ zum Tankträger geringfügig beweglich. Daher sind die Spannbänder während des Fahrzeugbetriebs durch Beschleunigungs- und Abbremsvorgänge zahlreichen Lastwechseln ausgesetzt, die sich insbesondere als Schläge auf die Befestigungs-Schlaufen auswirken. Entsprechend kann es an den Befestigungs-Schlaufen zur Rissbildung bis hin zum Funktionsversagen des Spannbandes kommen.

Aus der Praxis sind Bestrebungen bekannt, der Rissbildung an der Befestigungs-Schlaufe durch die Auswahl besonders widerstandsfähiger Flachbandmaterialien oder die Bereitstellung von Materialverstärkungen im Bereich der Befestigungs-Schlaufe entgegenzuwirken. Daraus ergeben sich jedoch erhöhte Kosten bzw. eine erhöhte Komplexität des Aufbaus eines Spannbandes.

Die genannten Probleme treten nicht nur bei der Befestigung eines Fahrzeugtanks an einem Fahrzeugträger, sondern generell bei der Befestigung von Gegenständen mit Spannbändern an einem Fahrzeug auf.

Eine Aufgabe der Erfindung ist es, ein verbessertes Spannband bereitzustellen, mit dem Nachteile herkömmlicher Spannbänder vermieden werden. Das Spannband soll sich insbesondere durch eine verringerte Neigung zur Rissbildung an der Befestigungs-Schlaufe, eine verlängerte Lebensdauer, einen einfachen Aufbau und/oder geringe Kosten auszeichnen.

Diese Aufgabe kann durch ein Spannband bzw. dessen Verwendung mit den Merkmalen der unabhängigen Ansprüche gelöst werden. Vorteilhafte Weiterbildungen der Erfindung ergeben sich aus den abhängigen Ansprüchen und der folgenden Beschreibung bevorzugter Ausführungsformen der Erfindung.

Gemäß einem ersten allgemeinen Gesichtspunkt der Erfindung wird zur Lösung der Aufgabe ein Spannband zur Befestigung von einem Behälter oder Transportgut an einem Fahrzeug, vorgeschlagen, wobei an zueinander entgegengesetzten Enden des Spannbandes einerseits eine Befestigungs-Schlaufe, die zur Befestigung des Spannbandes an einem Träger des Behälters oder Transportguts ausgelegt ist, und andererseits eine Spanneinrichtung vorgesehen sind. Gemäß der Erfindung ist das Flachbandmaterial des Spannbandes an der Befestigungs-Schlaufe durch mehrere Spalte (oder: Schlitze) unterbrochen, die in Zugrichtung des Spannbandes verlaufen. Das Spannband ist an seinem freien Ende, d. h. im Umschlagabschnitt der Befestigungs-Schlaufe in mehrere Bandstreifen (oder: Stege) unterteilt, welche durch die Spalte voneinander getrennt sind.

Gemäß einem zweiten allgemeinen Gesichtspunkt der Erfindung wird die Verwendung des erfindungsgemäßen Spannbandes zur Befestigung von einem Behälter oder Transportgut an einem Fahrzeug, vorzugsweise zur Befestigung eines Fahrzeugtanks an einem Fahrzeugträger eines Fahrzeugs, insbesondere eines Nutzfahrzeugs, vorgeschlagen.

Gemäß einem dritten allgemeinen Gesichtspunkt der Erfindung wird ein Kraftfahrzeug mit einem Fahrzeugtank vorgeschlagen, der mit mindestens einem erfindungsgemäßen Spannband an einem Fahrzeugträger befestigt ist.

Das erfindungsgemäße Spannband hat eine Reihe von Vorteilen, die auf den folgenden Überlegungen des Erfinders beruhen.

Erstens kann die in mehrere Bandstreifen unterteilte Befestigungs-Schlaufe leichter die Form ändern, als eine Befestigungs-Schlaufe aus einem flächig durchgehenden Flachbandmaterial. Bei Geometrieabweichungen wird eine Vergleichmäßigung der Lastaufteilung erzielt. Das Flachbandmaterial des Spannbandes wird an der Befestigungs-Schlaufe bei einem Lastwechsel lokal weniger stark beansprucht als bei einem herkömmlichen Spannband.

Zweitens wird im Fall einer Rissbildung lediglich der betroffene Bandstreifen reißen. Der Erfinder hat festgestellt, dass flächig durchgehendes Flachbandmaterial im Bereich der Befestigungs-Schlaufe eines herkömmlichen Spannbandes nach der Bildung eines Risses, z. B. vom Rand des Bandes her oder aus dem Vollmaterial heraus, das Wachstum des Risses durch das Flachbandmaterial begünstigt. Hierzu im Gegensatz wird durch die erfindungsgemäßen Spalte ein Wachstum von Rissen durch das Flachbandmaterial unterbunden.

Drittens hat der Erfinder festgestellt, dass bei herkömmlichen Spannbändern, die aus kaltgeformtem Stahl hergestellt sind, besonders im Umschlagabschnitt der Befestigungs-Schlaufe innere Spannungen auftreten können, welche bei Lastwechseln die Rissbildung begünstigen. Vorteilhafterweise wird durch die erfindungsgemäß vorgesehenen Spalte, wenn sie vor dem Umformen in das Flachbandmaterial eingebracht worden sind, ein Abbau innerer Spannungen im Flachbandmaterial erreicht.

Im Ergebnis zeichnet sich das erfindungsgemäße Spannband insbesondere im Umschlagabschnitt der Befestigungs-Schlaufe durch eine erhöhte Verformbarkeit, eine verringerte Rissbildung und verringerte innere Spannungen aus. Es ergeben sich eine erhöhte Lebensdauer des Spannbandes bzw. eine Verzögerung eines Bauteilversagens, ohne dass die Verwendung eines besonders widerstandsfähigen Flachbandmaterials oder eine Verstärkung der Befestigungs-Schlaufe erforderlich sind.

Die Spalte erstrecken sich in Zugrichtung des Spannbandes, d. h. bei einem geraden Spannband in dessen Längsrichtung. Die Spalte umfassen vorzugsweise gerade, parallele Ausnehmungen im Flachbandmaterial des Spannbandes. Die Befestigungs-Schlaufe ist durch ein Umlegen des Spannbandes in zwei Lagen gebildet, wobei das kurze Ende des Spannbandes zur Bildung der Befestigungs-Schlaufe auf dem langen Ende fixiert, z. B. angeschweißt, ist. Der Umschlagabschnitt der Befestigungs-Schlaufe hat typischerweise eine halbkreisförmige Querschnittsform. Die Spalte werden vorzugsweise mit einem Verfahren, das die Spalte ohne scharfe Kanten oder Grate bildet, z. B. durch Wasserschneiden, Laserbearbeitung o. dgl., hergestellt. Vorteilhafterweise wird damit die Ausbildung einer Kerbwirkung an den Rändern der Bandstreifen vermieden.

Gemäß der Erfindung ist die Länge der Spalte in Abhängigkeit vom Krümmungsradius R der Befestigungs-Schlaufe, insbesondere des Umschlagabschnitts, zwischen πR und 2πR gewählt. Bei einer Länge πR erstrecken sich die Spalte vorteilhafterweise über den halben Durchmesser eines von der Befestigungs-Schlaufe aufgenommenen Trägerelements, z. B. Haltebolzens, während eine Länge von 2πR eine Erstreckung der Spalte über den gesamten Durchmesser des von der Befestigungs-Schlaufe aufgenommenen Trägerelements ergibt. Der Längenbereich von πR bis 2πR hat den besonderen Vorteil, dass bei geringeren Längen die genannten Wirkungen der Spalte nur eingeschränkt erreicht werden und bei größeren Längen unerwünschte Bewegungen quer zur Zugrichtung des Spannbandes auftreten können.

Gemäß einer weiteren bevorzugten Ausführungsform der Erfindung weisen die Spalte quer zur Zugrichtung des Spannbandes eine geringere Breite als die Bandstreifen des Flachbandmaterials auf. Vorteilhafterweise werden damit unerwünschte Querbewegungen der Bandstreifen minimiert und eine Beeinträchtigung der Belastbarkeit der Befestigungs-Schlaufe vermieden.

Wenn gemäß einer weiteren bevorzugten Ausgestaltung der Erfindung die Spalte an ihren Enden in Zugrichtung des Spannbandes abgerundet sind, können sich Vorteile für den Spannungsabbau im Material des Flachbandes und die Vermeidung von Rissen und Kerbwirkungen an den Enden der Bandstreifen ergeben.

Allgemein umfasst die Befestigungs-Schlaufe des erfindungsgemäßen Spannbandes mindestens zwei Spalte bzw. mindestens drei Bandstreifen, welche durch die mindestens zwei Spalte getrennt sind. Bevorzugt werden Ausführungsformen der Erfindung realisiert, bei denen mindestens drei Spalte, insbesondere mindestens vier Spalte, wie z. B. fünf, sechs oder mehr Spalte vorgesehen sind. Mit der Zahl der Spalte kann die Flexibilität der Befestigungs-Schlaufe vergrößert bzw. die Neigung zur Rissbildung vermindert werden.

Vorteilhafterweise bestehen keine Einschränkungen hinsichtlich der Gestaltung der Spanneinrichtung am zweiten Ende des Spannbandes. Es kann jeder Typ von Spanneinrichtungen vorgesehen sein, wie sie von herkömmlichen Spannbändern bekannt sind. Vorzugsweise ist als Spanneinrichtung eine Spannschloss-Schlaufe vorgesehen, in der ein Spannbolzen, z. B. ein T-förmiger Spannbolzen oder ein Spannbolzen mit einem Quergewinde zur Aufnahme einer Spannschraube angeordnet ist. Die Bereitstellung der Spannschloss-Schlaufe mit dem Spannbolzen bietet Vorteile aufgrund des einfachen Aufbaus und der Möglichkeit, mehrere erfindungsgemäße Spannbänder miteinander zu kombinieren.

Beispielsweise kann ein erstes Spannband mit seiner Befestigungs-Schlaufe an einem ersten Haltebolzen des Fahrzeugs, z. B. des Tankträgers, und ein zweites Spannband mit seiner Befestigungs-Schlaufe an einem zweiten Haltebolzen befestigt sein, während die Spanneinrichtungen der ersten und zweiten Spannbänder miteinander verbunden sind und die Spannbänder gemeinsam mit der Trägereinrichtung, z. B. dem Tankträger, den befestigten Gegenstand, z. B. den befestigten Tank, einschließen.

Gemäß einer weiteren bevorzugten Ausführungsform der Erfindung umfasst das Flachbandmaterial des Spannbandes kaltumgeformten Stahl. Besonders bevorzugt ist das Flachbandmaterial einstückig gebildet, wobei die Befestigungs-Schlaufe und optional die Spannschloss-Schlaufe durch umgelegte Enden des Flachbandmaterials hergestellt sind. Die Erfindung ist jedoch nicht auf die Verwendung von Stahl beschränkt. Vielmehr kann das Flachbandmaterial andere Metalle oder Legierungen, Kunststoff oder Kompositmaterialien umfassen.

Weitere Einzelheiten und Vorteile der Erfindung werden im Folgenden unter Bezug auf die beigefügten Zeichnungen beschrieben. Es zeigen:
- Figuren 1 bis 3: eine Draufsicht, eine Seitenansicht und eine Perspektivansicht einer bevorzugten Ausführungsform des erfindungsgemäßen Spannbandes;
- Figur 4:: eine Perspektivansicht der Befestigungs-Schlaufe des erfindungsgemäßen Spannbandes;
- Figur 5:: eine Draufsicht auf das Flachbandmaterial des Spannbandes vor Bildung der Befestigungs-Schlaufe;
- Figur 6:: eine Seitenansicht der Befestigungs-Schlaufe; und
- Figur 7:: eine schematische Seitenansicht eines mit mehreren Spannbändern befestigten Fahrzeugtanks.

Merkmale bevorzugter Ausführungsformen der Erfindung werden im Folgenden unter beispielhaftem Bezug auf Spannbänder beschrieben, die zur Befestigung von Fahrzeugtanks an einem Fahrzeugträger eines Kraftfahrzeugs ausgelegt sind. Die Erfindung ist jedoch nicht auf diese Anwendung beschränkt, sondern bei der Befestigung von einem Behälter oder von Transportgut vorgesehen. Das erfindungsgemäße Spannband kann, wie im Folgenden dargestellt, eine gerade Form mit Schlaufen, die relativ zum Spannbandbereich zwischen den Schlaufen abgewinkelt sind, oder alternativ eine gekrümmte, vorzugsweise an die Gestalt des zu haltenden Gegenstandes angepasste Form des Spannbandbereiches zwischen den Schlaufen aufweisen.

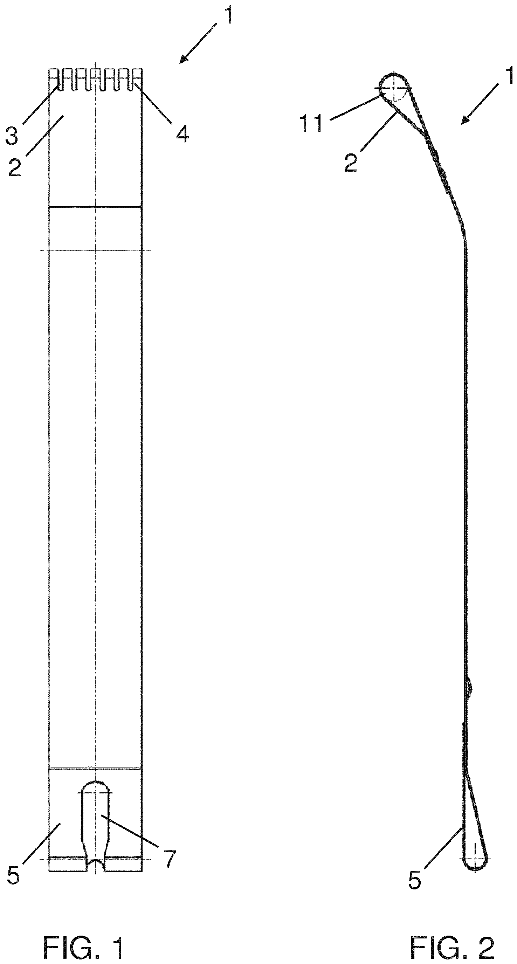

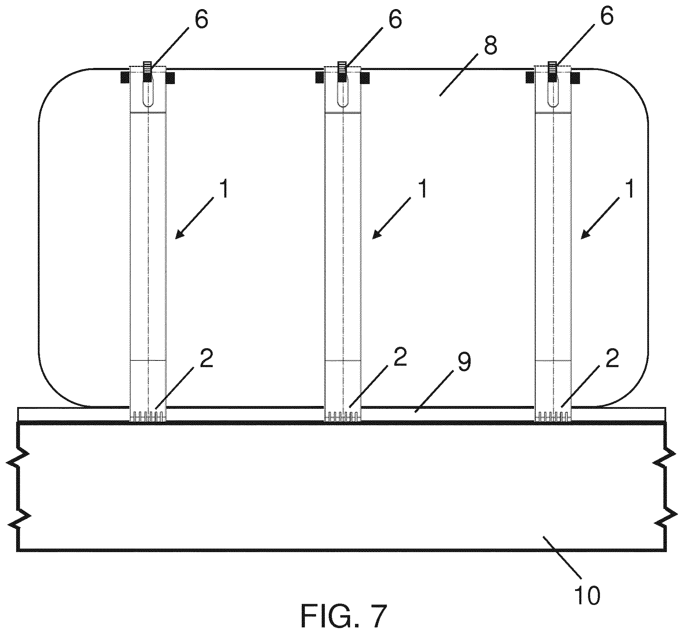

Die Figuren 1 bis 6 zeigen verschiedene Ansichten einer bevorzugten Ausführungsform des erfindungsgemäßen Spannbandes 1 und von dessen Teilen. Wie in der Draufsicht, der Seitenansicht und der Perspektivansicht der Figuren 1 bis 3 gezeigt, umfasst das Spannband 1 einen langgestreckten Streifen eines Flachbandmaterials, wie z. B. Stahl vom Typ S355 oder S420, das an den Enden zur Bildung von Schlaufen umgelegt ist. An einem ersten Ende des Spannbandes 1 ist die Befestigungs-Schlaufe 2 gebildet, die zur Befestigung am Fahrzeug, z. B. zur Aufnahme eines Haltebolzens 11 (siehe Figur 2, oben) ausgelegt ist. Am zweiten, entgegengesetzten Ende des Spannbandes 1 befindet sich die Spanneinrichtung in Gestalt einer Spannschloss-Schlaufe 5, in der ein Spannbolzen (in den Figuren 1 bis 3 nicht dargestellt, siehe Spannbolzen 6 in Figur 7) angeordnet ist.

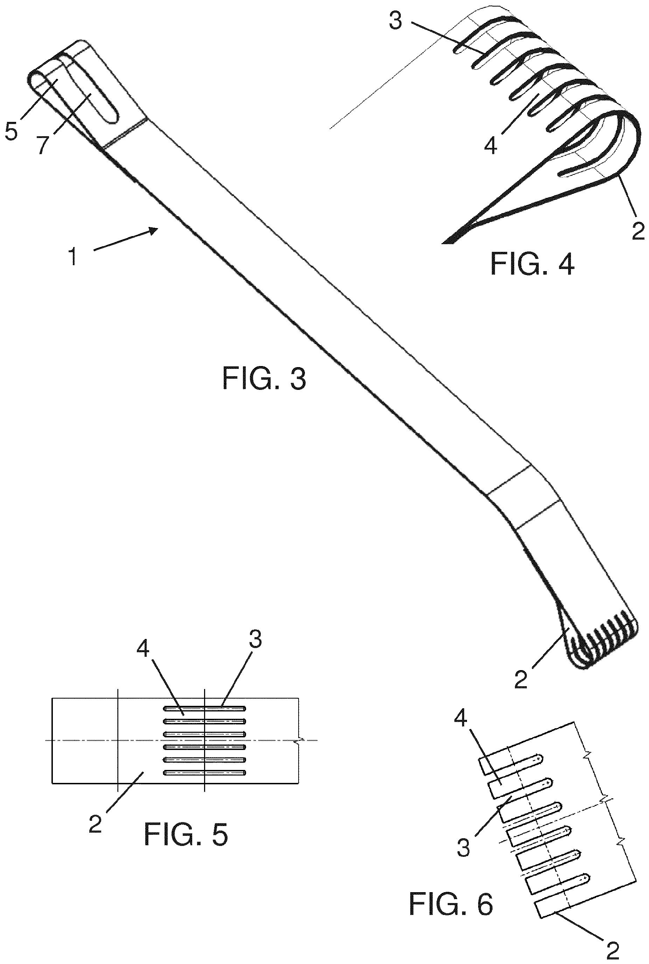

Die Befestigungs-Schlaufe 2 weist sechs Spalte 3 auf, die sich in Längsrichtung des Spannbandes 1 erstrecken und quer zur Längsrichtung gleichmäßig beabstandet sind. Entsprechend sind an der Befestigungs-Schlaufe 2 sieben Bandstreifen 4 (siehe Figuren 4, 5 und 6) gebildet, die den Haltebolzen 11 umgreifen. Die Länge der Spalte 3 ist so gewählt, dass die Spalte 3 über den gesamten Durchmesser des Halteelements 11 (siehe Figur 2, oben) reichen. Die Bandstreifen haben in der Befestigungs-Schlaufe 2 die Geometrie eines Kamms oder der Zugelemente eines Expanders.

Am zweiten Ende des Spannbandes 1 ist in der Spannschloss-Schlaufe 5 eine Ausnehmung 7 gebildet, durch die der Spannbolzen 6 (siehe Figur 7) vorragt. Die Spannschloss-Schlaufe 5 mit dem Spannbolzen 6 ist z. B. so aufgebaut, wie es von herkömmlichen Spanneinrichtungen bekannt ist.

Die Länge des Spannbandes 1 ist beispielsweise im Bereich von 400 mm bis 800 mm gewählt, während die Breite des Spannbandes 1 z. B. 30 mm bis 80 mm beträgt. Die Breite der Spalte 3 kann beispielsweise im Bereich von 2 mm bis 10 mm gewählt sein. Der Krümmungsradius R der Befestigungs-Schlaufe 2 ist z. B. im Bereich von 5 mm bis 15 mm gewählt.

Figur 7 zeigt schematisch einen Teil eines Kraftfahrzeugs 10 mit einem Tankträger 9, auf dem ein Fahrzeugtank 8 mit mehreren Spannbändern 1 befestigt ist. Die ersten Enden der Spannbänder 1 mit den Befestigungs-Schlaufen 2 sind am Tankträger 9 fixiert, während die zweiten Enden der Spannbänder 1 über die Spannbolzen 6 an den Spannschloss-Schlaufen 5 jeweils mit weiteren Spannbändern (nicht dargestellt) an der Oberseite des Fahrzeugtanks 8 verbunden sind. Zwischen den Spannbändern 1 und der Oberfläche des Fahrzeugtanks 8 sind deformierbare Unterlagen, z. B. aus Gummi, (nicht dargestellt) vorgesehen.

Alternativ können die Spannbänder 1 bei geeigneter Länge und Form den Tank 8 vollständig umschließen, wobei in diesem Fall die Spannschloss-Schlaufen 5 über die zugehörigen Spannbolzen 6 direkt mit entsprechenden Spannmuttern am Tankträger 9 gekoppelt sind.

### Bezugszeichenliste

- 1: Spannband
- 2: Befestigungs-Schlaufe
- 3: Spalte
- 4: Bandstreifen
- 5: Spannschloss-Schlaufe
- 6: Spannbolzen
- 7: Ausnehmung
- 8: Fahrzeugtank
- 9: Tankträger
- 10: Kraftfahrzeug
- 11: Haltebolzen

## Patentansprüche

1. Spannband (1) zur Befestigung von einem Behälter oder Transportgut an einem Fahrzeug (10), umfassend eine Befestigungs-Schlaufe (2), die an einem Ende des Spannbandes (1) durch Flachbandmaterial des Spannbandes (1) mit einem Krümmungsradius R gebildet ist, und eine Spanneinrichtung, die an einem entgegengesetzten Ende des Spannbandes (1) angeordnet ist,
**dadurch gekennzeichnet, dass**
die Befestigungs-Schlaufe (2) durch mehrere, in Zugrichtung des Spannbandes (1) verlaufende Spalte (3) in Bandstreifen (4) unterteilt ist, und
die Spalte (3) eine Länge aufweisen, die zwischen πR und 2πR gewählt ist.

2. Spannband nach dem vorhergehenden Anspruch, wobei die Spalte (3) quer zur Zugrichtung eine geringere Breite als die Bandstreifen (4) aufweisen.

3. Spannband nach einem der vorhergehenden Ansprüche, wobei die Spalte (3) in Zugrichtung des Spannbandes (1) im Flachbandmaterial abgerundete Enden aufweisen.

4. Spannband nach einem der vorhergehenden Ansprüche, wobei mindestens drei Spalte (3) vorgesehen sind.

5. Spannband nach einem der vorhergehenden Ansprüche, wobei die Spanneinrichtung eine Spannschloss-Schlaufe (5) umfasst, die durch das Flachbandmaterial des Spannbandes (1) gebildet ist und in der ein Spannbolzen (6) angeordnet ist.

6. Spannband nach einem der vorhergehenden Ansprüche, wobei das Flachbandmaterial kaltumgeformten Stahl umfasst.

7. Spannband nach einem der vorhergehenden Ansprüche, das zur Befestigung eines Fahrzeugtanks (8) an einem Tankträger (9) des Kraftfahrzeugs (10) konfiguriert ist.

8. Verwendung des Spannbandes (1) nach einem der vorhergehenden Ansprüche zur Befestigung von einem Behälter oder Transportgut an einem Kraftfahrzeug (10), insbesondere eines Fahrzeugtanks (8) an einem Tankträger (9) des Kraftfahrzeugs (10).

9. Kraftfahrzeug (10), insbesondere Nutzfahrzeug, das mit einem Tankträger (9) und einem Fahrzeugtank (8) ausgestattet ist, wobei der Fahrzeugtank (8) mit mindestens einem Spannband (1) nach einem der Ansprüche 1 bis 7 am Tankträger (9) befestigt ist.

## Claims

1. A tightening strap (1) for attaching a container or item to be transported to a vehicle (10), comprising an attachment loop (2), which is formed with a radius of curvature R at one end of the tightening strap (1) by flat strap material of the tightening strap (1), and a tightening device, which is arranged at an opposite end of the tightening strap (1),
**characterized in that**
the attachment loop (2) is divided into strap strips (4) by a plurality of gaps (3) running in the tension direction of the tightening strap (1), and
the gaps (3) have a length chosen to be between nR and 2πR.

2. The tightening strap according to the preceding claim, wherein the gaps (3), transversely to the tension direction, have a smaller width than the strap strips (4).

3. The tightening strap according to either of the preceding claims, wherein the gaps (3) have rounded-off ends in the flat strap material in the tension direction of the tightening strap (1).

4. The tightening strap according to one of the preceding claims, wherein at least three gaps (3) are provided.

5. The tightening strap according to one of the preceding claims, wherein the tightening device comprises a screw-shackle loop (5), which is formed by the flat strap material of the tightening strap (1) and in which is arranged a tightening bolt (6).

6. The tightening strap according to one of the preceding claims, wherein the flat strap material comprises cold-formed steel.

7. The tightening strap according to one of the preceding claims, which is configured to attach a vehicle tank (8) to a tank carrier (9) of the motor vehicle (10).

8. The use of the tightening strap (1) according to one of the preceding claims for attaching a container or item to be transported to a motor vehicle (10), in particular for attaching a vehicle tank (8) to a tank carrier (9) of the motor vehicle (10).

9. A motor vehicle (10), in particular utility vehicle, which is equipped with a tank carrier (9) and a vehicle tank (8), wherein the vehicle tank (8) is attached to the tank carrier (9) by at least one tightening strap (1) according to one of Claims 1 to 7.

## Revendications

1. Bande de serrage (1) pour la fixation d'un récipient ou d'une marchandise de transport sur un véhicule (10), comprenant une boucle de fixation (2) qui est formée à une extrémité de la bande de serrage (1) par un matériau de bande plate de la bande de serrage (1) ayant un rayon de courbure R, et un dispositif de serrage qui est disposé à une extrémité opposée de la bande de serrage (1),
**caractérisée en ce que**
la boucle de fixation (2) est divisée en rubans de bande (4) par plusieurs fentes (3) s'étendant dans la direction de traction de la bande de serrage (1), et
les fentes (3) présentent une longueur choisie entre πR et 2πR.

2. Bande de serrage selon la revendication précédente, dans laquelle les fentes (3) présentent, transversalement à la direction de traction, une plus faible largeur que les rubans de bande (4).

3. Bande de serrage selon l'une quelconque des revendications précédentes, dans laquelle les fentes (3) présentent, dans la direction de traction de la bande de serrage (1), des extrémités arrondies dans le matériau de bande plate.

4. Bande de serrage selon l'une quelconque des revendications précédentes, dans laquelle au moins trois fentes (3) sont prévues.

5. Bande de serrage selon l'une quelconque des revendications précédentes, dans laquelle le dispositif de serrage comprend une boucle de tendeur (5) qui est formée par le matériau de bande plate de la bande de serrage (1) et dans laquelle est disposé un boulon de serrage (6).

6. Bande de serrage selon l'une quelconque des revendications précédentes, dans laquelle le matériau de bande plate comprend de l'acier façonné à froid.

7. Bande de serrage selon l'une quelconque des revendications précédentes, qui est configurée pour la fixation d'un réservoir de véhicule (8) sur un support de réservoir (9) du véhicule automobile (10).

8. Utilisation de la bande de serrage (1) selon l'une quelconque des revendications précédentes pour la fixation d'un réservoir ou d'une marchandise de transport sur un véhicule automobile (10), en particulier d'un réservoir de véhicule (8) sur un support de réservoir (9) du véhicule automobile (10).

9. Véhicule automobile (10), en particulier véhicule utilitaire, qui est muni d'un support de réservoir (9) et d'un réservoir de véhicule (8), le réservoir de véhicule (8) étant fixé sur le support de réservoir (9) avec au moins une bande de serrage (1) selon l'une quelconque des revendications 1 à 7.
